**Europäisches Patentamt**

**European Patent Office**

**Office européen des brevets**

(11) Publication number: **0 144 644**
**B1**

(12) **EUROPEAN PATENT SPECIFICATION**

(45) Date of publication of patent specification: **06.09.89**

(21) Application number: **84112478.7**

(22) Date of filing: **16.10.84**

(51) Int. Cl.⁴: **A 23 L 1/308, A 23 P 1/14**

(54) **Psyllium mucilloid products.**

(30) Priority: **12.12.83 US 560720**

(43) Date of publication of application:
**19.06.85 Bulletin 85/25**

(45) Publication of the grant of the patent:
**06.09.89 Bulletin 89/36**

(84) Designated Contracting States:
**DE FR GB IT**

(56) References cited:
**EP-A-0 105 195**
**EP-A-0 142 601**
**WO-A-80/00658**
**DE-A-2 430 509**
**DE-B-2 919 449**
**FR-A-2 342 667**
**FR-A-2 390 961**
**FR-A-2 438 975**
**GB-A-2 067 402**
**US-A-2 060 336**

(73) Proprietor: **THE PROCTER & GAMBLE
COMPANY
301 East Sixth Street
Cincinnati Ohio 45202 (US)**

(72) Inventor: **Colliopoulos, John Andrew
1114 Dobson
Evanston, IL 60202 (US)**

(74) Representative: **Wolff, Hans Joachim, Dr.jur.
Dipl.-Chem. et al
Beil, Wolff & Beil Rechtsanwälte Postfach 80 01
40 Adelonstrasse 58
D-6230 Frankfurt am Main 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a novel composition and method of making and using psyllium high fiber food products useful as a dietary aid in the control of constipation and/or as a dietary aid in weight loss- and maintenance. In its composition aspect, it relates to a novel dry blend or agglomerated composition comprising psyllium mucilloid of at least 10 to 80 weight percent, total dietary fiber of from 25 to 100 weight percent from a grain, fruit or vegetable source wherein the psyllium is a part of the dietary fiber. The dry blend or high fiber food product base is incorporated into suitable compositions to provide psyllium high fiber drink mix and extruded psyllium high fiber bars or puffs which may additionally contain optional sweeteners, flavoring agents, protein sources, surfactants, wetting agents, preservatives and the like. In its method aspect, it relates to novel processes comprising blending or agglomerating the novel composition, then adding water as necessary to form a drink which can be used as a dietary aid or to control constipation, or extruding at a temperature of between about 150° and 200° C such that the final product has a psyllium content of between 10 to 80 weight percent to form a high fiber bar or puff.

Psyllium mucilloid consists of the mucillaginous portion (the husk either milled or unmilled) of blond psyllium seeds. Psyllium mucilloid contains natural mucillage and normally forms a gelatinous mass on contact with water. It is useful in the treatment of constipation by acting as a fecal softener and also as a demulcent in the presence of inflamed mucosa. Psyllium mucilloid exhibits poor dispersability and mixability in water. The numerous individual particles tend to agglomerate when psyllium mucilloid is mixed with water. Hydration takes place over the surface of such agglomerated aggregates to form gel-coated lumps, the interiors of which are still substantially dry, and these lumps are extremely difficult to disperse. This effect is aggravated by the fact that psyllium has a tendency to float on the surface of the water, allowing partially dissolved particles to agglomerate into large masses. In addition, the taste of psyllium mucilloid is unacceptable to many persons.

Diets high in fiber have become increasingly more significant in American diets. Typical of the foods consumed are high fiber breads, whole grains and granolas, granola bars, etc. Diets high in fiber are important because they can be an adjunct to a weight loss program, and in addition, the roughage of high fiber aids in decreasing constipation.

While granola and other high fiber bars are attractive because of their portability, they are relatively high in fats used as adhesive agents and therefore high in calories. A "granola" bar supplying 3 grams of dietary fiber would contain 125—150 calories.

Attempts to make a fiber bar that is an expanded type product like a cracker without high caloric content have been largely unsuccessful. The fiber products such as soy bran, corn bran, wheat bran or rice bran work against the expanders needed for the proper amount of "puff" in a cracker-type product or cereal type puff. Psyllium, while also a dietary fiber, has largely been avoided due to its mucillaginous nature and the need to add water to most extruded products.

It is therefore an object of this invention to provide psyllium high fiber food products, specifically psyllium high fiber bars, puffs and drinks, and methods of making same, which are relatively low in calories and a useful adjunct in the control of weight gain and constipation. A further object of this invention is to provide psyllium high fiber food products which will, in addition, aid to curb the appetite.

Accordingly, it has been discovered that an expanded high fiber bar or puff can be made comprising at least 10 to about 80 weight percent psyllium mucilloid, water, 10 to 30 weight percent of an expander, and total dietary fibers of from 25 to 80 weight percent wherein the psyllium mucilloid may be a part of the dietary fiber. Optionally, one could add sweeteners, preferably from 0 to 30 weight percent, flavoring agents, preferably from about 3 to 5 weight percent and a protein source, preferably from about 0 to 20 weight percent, the critical and novel portion of the invention being the addition of psyllium within a defined range to obtain an expanded fiber bar product. Without the psyllium, the fiber bar or puff will not expand and no "puffed" cracker-type product is possible. It has been surprisingly found that the mucillaginous properties of psyllium are not a problem within the given range when water is added in the extrusion process.

It has also been discovered that a psyllium high fiber drink mix can be made by dry blending or agglomerating, a base comprising at least 20 to 80 weight percent psyllium mucilloid, and total dietary fibers of from 25 to 100 weight percent wherein psyllium mucilloid may be a part of the dietary fiber and dietary fibers other than psyllium constitute at least 5 weight percent. Optionally, one could add sweeteners, preferably from about 0 to 5 weight percent, flavoring agents, preferably from about 0 to 5 weight, a protein source, wetting agents, surfactants or the like, preferably from about 0 to 20 weight percent, the critical and novel portion of the invention being the addition of psyllium with a blend of dietary fibers with at least 20 weight percent psyllium to obtain a wettable, dispersable high fiber drink product. Without the psyllium, the other fiber(s) will not wet or disperse well nor have the desired pharmaceutical effect. It has been surprisingly found that the mucillaginous agglomerated aggregates do not form gel coated lumps within the given range of the invention without the addition of sucrose while retaining acceptable taste and remaining relatively low in calories. The dry blended or agglomerated base may be employed as an intermediate in the preparation of the high fiber bars or puffs of this invention.

Dietary fibers are naturally occurring in grains, cereals, fruits and vegetables. They can be classified as cellulose, hemicellulose, lignin, gums or pectins. Examples of dietary fibers are soy bran, corn bran, wheat bran, rice bran, psyllium, carrageenan, the known gums and pectins. The most preferred dietary fibers are the cereal brans and while these normally tend to work against expansion, that is not the case when psyllium is used. Since psyllium itself is a dietary fiber, it is possible to make the food products of this invention using only psyllium as the dietary fiber source. However, a combination of dietary fibers is most preferred.

Expanders are those substances which under proper conditions one skilled in the art can make an extruded product puff or expand into airy crackers such as saltines, etc. Examples of expanders are rice flour, corn flower, wheat flower and modified starches.

Optional protein sources are animal or vegetable protein such as soy protein isolate, which is 95% protein or milk protein. Sweeteners can be the naturally occurring sweeteners such as sucrose or fructose or the artificially made sweeteners such as saccharin, acetosulfame cyclamate and aspartame. Flavoring agents can be chosen from a wide variety of agents known to those skilled in the art, for example, apple-cinnamon, peanut butter, granola, etc.

Wetting agents and solubilizing agents can be added to further improve the compositions. Examples of suitable wetting agents and solubilizing agents are polysorbate 60 and sodium lauryl sulfate.

The bars and puffs of the present invention are manufactured by mixing the ingredients, except the water, and then blending for about 15 to 30 minutes until the mixture is fairly homogeneous. Optionally, ingredients which are added in small amounts (e.g., aspartame) could be premixed with, for example, the expander, in order to insure more uniform mixing. The mixture is then fed to an extruder of the type used by one skilled in the art for making an expanded cracker-type product with a water feed and extruded at from about 150° to about 200°C using techniques known in the art. The cracker may then be cut to the appropriate size and packaged for sale. A preferred cracker would contain 3 grams of dietary fiber per bar. This cracker would contain approximately 25 calories. A high fiber breakfast cereal type puff is made in like manner as the bar except that smaller pieces are made. In general the size and weight would be similar in size to what one skilled in the art would use for non-high fiber "breakfast cereal" type puffs.

The high fiber drink composition of the present invention is manufactured by either dry blending the ingredients or coating the dry blended ingredients with a suitable water soluble material such as gums, cellulose derivative, hydrolyzed starch oligosaccharide, mono or disaccharide, a polyglucose or a polymaltose to form an agglomerate by methods well known to one skilled in the art wherein said agglomerate coating may be up to 5 weight percent of the total mix. The product may then be mixed with water to form a "drink" as needed. In general, a preferred single dose for laxative purposes or dietary aid would be such that about 3.2—3.7 grams of psyllium and 1.0—2.5 grams of the fibers are delivered.

These high fiber food products have several utilities. First, in a weight control program there is a dual action to the crackers or puffs and drinks. This dual action consists of the intake of caloric fiber which aids in the saliation of appetite yet provides little caloric intake and the mucillaginous psyllium which expands in the stomach and will tend to give a "full" feeling. Second, because of the laxative action of both psyllium and dietary fibers in general, the bars and drinks may be used as roughage to decrease occurrences of constipation. Thirdly, because a variety of dietary fibers can be used, a well balanced supplement of dietary fibers (soluble and insoluble) may be made. In addition, the dry blend mix is useful as an intermediate in making the agglomerated product and the fiber bar.

The invention will appear more fully from the examples which follow.

# EP 0 144 644 B1

### Example 1
### Apple Cinnamon Flavor Fiber Bars

The following materials were mixed about 15-20 minutes until well blended in a ribbon blender. Samples are taken from different areas of the blender to insure uniform mixing.

| COMPONENT | AMOUNT PER DOSE (g) | AMOUNT PER BATCH (Kg) |
|---|---|---|
| Refined Corn Bran G-Fine | 1.4175 | 157.50 |
| Sized Mucilloid | 1.3950 | 155.00 |
| Sucrose, NF | 1.3500 | 150.00 |
| Fructose, USP | 1.3500 | 150.00 |
| Yellow Corn Cones | 1.1700 | 130.00 |
| Soy Protein Isolate (Profam S-955) | 0.6750 | 75.00 |
| Rice Flour | 0.4500 | 50.00 |
| Apple Durarome Natural Flavor | 0.2250 | 25.00 |
| Rice Bran (Protex 40) | 0.1800 | 20.00 |
| Oleoresin Cinnamon Durarome | 0.1800 | 20.00 |
| Ground Korintji Cinnamon | 0.1800 | 20.00 |
| Wheat Bran | 0.1575 | 17.50 |
| Avicel pH 101 | 0.1350 | 15.00 |
| Citrus Pectin, Jet-Sol #3454 | 0.0450 | 5.00 |
| Guar Gum Pretested 8/20 C Powder | 0.0450 | 5.00 |
| Locust Bean Gum Pretested POR/A Powder | 0.0450 | 5.00 |
| | 9.0000g | 1000.00Kg |

The mixture is then extruded using a Creusot-Loire Model BC72 using a central feed plate with a brass die, a stainless steel die or other metal may also be used (38mm × 2 mm) and metal die calibrator with teflon liners and with a metal calibrator space of 1/16 inch or central feed plate with two slots (dies) may also be used. Water was fed at 150 ml/min. and the extruder at 1500 psi with a mixture feed rate of 1.686 Kg/m. Barrel temperature was 188°C. Screw speed was 150 RPM. Wafers were cut to 9 grams in size using a Leroy Saver Model MVS—50 cutter. These bars contain 3 grams of dietary fiber and have a caloric content of 24.

### Example 2
### Peanut Flavor Fiber Bar

Using the method of Example 1, the following mixture was made into 9 g fiber bars.

| COMPONENT | AMOUNT PER DOSE (g) | AMOUNT PER BATCH (Kg) |
|---|---|---|
| Sized Mucilloid | 2.125 | 236.11 |
| Fructose, USP | 1.250 | 138.89 |
| Sucrose, NF | 1.250 | 138.89 |
| Yellow Corn Cones | 1.125 | 125.00 |
| Refined Corn Bran G-Fine | 0.910 | 101.11 |
| Rice Flour | 0.720 | 80.00 |
| Soy Protein Isolate (Profam S-955) | 0.675 | 75.00 |
| Natural Peanut Flavor #70000 | 0.450 | 50.00 |
| Rice Bran (Protex 40) | 0.225 | 25.00 |
| Avicel pH 101 | 0.135 | 15.00 |
| Citrus Pectin, Jet Sol #3454 | 0.045 | 5.00 |
| Guar Gum Pretested 8/20 C Powder | 0.045 | 5.00 |
| Locust Bean Gum Pretested POR/A Powder | 0.045 | 5.00 |
| | 9.000g | 1000.00Kg |

4

Example 3
Granola Fiber Bar
Using the method of Example 1, the following mixture was made into 9 gram granola fiber bars.

| COMPONENT | AMOUNT PER DOSE (g) | AMOUNT PER BATCH (kg) |
|---|---|---|
| Sized Mucilloid | 2.0070 | 223.00 |
| Brownulated Powdered Sugar | 1.3500 | 150.00 |
| Fructose, USP | 1.3500 | 150.00 |
| Yellow Corn Cones | 0.9630 | 107.00 |
| Rice Flower | 0.9000 | 100.00 |
| Soy Protein Isolate (Profam S-955) | 0.7200 | 80.00 |
| Refined Corn Bran G-Fine | 0.7200 | 80.00 |
| Granola-100% Natural Cereal | 0.4500 | 50.00 |
| Avicel pH 101 | 0.1350 | 15.00 |
| Natural Vanilla Malt Flavor. FX #502 | 0.1350 | 15.00 |
| Rice Bran (Protex 40) | 0.1350 | 15.00 |
| Citrus Pectin, Jet-Sol #3454 | 0.0450 | 5.00 |
| Guar Gum Pretested 8/20 C Powder | 0.0450 | 5.00 |
| Locust Bean Gum Pretested POR/A Powder | 0.0450 | 5.00 |
| | 9.000 g | 1000.00Kg |

Example 4
Whole Grain Fiber Bars
Using the method of Example 1, the following mixture was made into 6 g whole grain flavor fiber bars.

| COMPONENT | AMOUNT PER DOSE (g) | AMOUNT PER BATCH (Kg) |
|---|---|---|
| Yellow Corn Cones | 1.0800 | 180.00 |
| Sized Mucilloid | 1.0500 | 175.00 |
| Rice Flour | 0.9000 | 150.00 |
| Refined Corn Bran G-Fine | 0.6000 | 100.00 |
| Rice Bran (Protex 40) | 0.6000 | 100.00 |
| Soy Protein Isolate (Profam S-955) | 0.6000 | 100.00 |
| Oat Flour | 0.3150 | 52.50 |
| Wheat Bran | 0.1800 | 30.00 |
| Salt, Sifto-50 | 0.1350 | 22.50 |
| Hard Wheat Flour | 0.1080 | 18.00 |
| Soft Wheat Flour | 0.1080 | 18.00 |
| Avicel pH 101 | 0.0900 | 15.00 |
| Brownulated Powdered Sugar | 0.0750 | 12.50 |
| Toasted Oat Flavor S-3624 MWN 1-TS | 0.0690 | 11.50 |
| Citrus Pectin, Jet-Sol #3454 | 0.0690 | 5.00 |
| Guar Gum Pretested 8/20 C Powder | 0.0300 | 5.00 |
| Locust Bean Gum Pretested POR/A Powder | 0.0300 | 5.00 |
| | 6.0000 g | 1000.00 Kg |

One six gram wafer contains 2 grams of dietary fiber and 14 calories.

5

Example 5
Apple Cinnamon "Breakfast Cereal" Type Puffs

Using the method of Example 1 but using 2 stainless steel dies each with 2 round holes (diameter 3/16"), the following mixture was made into high fiber breakfast cereal type puffs. Each puff weighs 7 grams and contains approximately 13 calories.

| Component | Per 7 gm of Serving |
|---|---|
| Psyllium Mucilloid(Searle) | 3.500 g |
| Corn Meal (Yellow corn cones) | 1.085 g |
| Soy Protein Isolate (Profam S-955) | 0.840 g |
| Food Starch (Bakasnak) | 0.700 g |
| White Rice Flour | 0.476 g |
| Natural Apple Flavor(Durarome) | 0.105 g |
| Oleo Cinnamon (Durarome) | 0.105 g |
| Ground Korintji Cinnamon (McCormick) | 0.091 g |
| Partially Hydrogenated Vegetable Oil (Durkex 500) | 0.049 g |
| Aspartame (Searle) | 0.035 g |
| Lecitreme-3527 (Beatrice) | 0.014 g |

Example 6
Chocolate Flavor High Fiber Base

The following mixture was dry blended in a Hobart blender:

| | Amt/Batch | Amt/Dose | % |
|---|---|---|---|
| Psyllium mucilloid | 41.97g | 3.5g | 20.98 |
| Corn bran | 20.38g | 1.7g | 10.92 |
| N.F. Milk Solids | 59.95g | 5.0g | 29.98 |
| Sweet Whey | 23.98g | 2.0g | 11.99 |
| Lecithinated Cocoa | 29.98g | 2.0g | 14.99 |
| Carob Magna | 11.99g | 1.0g | 5.99 |
| Aspartame | 0.96g | 0.08 | 0.48 |
| Dariloid | 4.80g | 0.4g | 2.40 |
| Locust Bean Gum | 6.00g | 0.5g | 2.99 |

An individual dose is 16.68 g which can be mixed with 8 oz of water to form a psyllium high fiber drink with a milk chocolate flavor.

Example 7

The dry blend mixture of Example 1 was agglomerated using 7.7% maltodextrin as a coating agent in a Freund Agglomerator to give a dose of 17.96 g which is dissolved and dispersed readily in 8 oz of water.

Example 8
Orange Flavor High Fiber Drink Base

The following mixture is dry blended in a Hobart blender and used dry as an intermediate to a spray agglomerated product with 17.7 g Maltrin M—100 in 175 ml of water:

| | Amt/Batch | Amt/Dose | % |
|---|---|---|---|
| Psyllium | 175.00g | 3.5g | 50.00 |
| Rice Bran | 145.74 | 2.9 | 41.64 |
| Citric acid | 17.50 | 0.35 | 5.00 |
| Orange Flavor | 10.71 | 0.21 | 3.06 |
| Saccharin | .77 | 0.015 | 0.22 |
| Yellow #6 | .35 | 0.007 | 0.11 |

6

Example 9

The following powder is prepared for use as a powdered drink mix and as an intermediate to a spray agglomerated product.

|  | Amt/Batch | Amt/Dose | % |
|---|---|---|---|
| Psyllium | 268.00g | 3.4g | 66.0 |
| Corn Bran | 125.60 | 1.6 | 31.5 |
| Aspartame | 6.4 | 0.08 | 1.6 |

**Claims**

1. A dry-blended psyllium high fiber food product base comprising from about 20 to 80 weight percent psyllium mucilloid and from 25 to 100 weight percent dietary fiber wherein the psyllium mucilloid is a part of the dietary fiber and the dietary fibers other than psyllium constitute at least 5 weight percent of the total fibers.

2. The psyllium food product base of Claim 1 wherein said base additionally comprises up to 5 weight percent of a sweetening agent.

3. The psyllium food product base of Claim 2 wherein said sweetening agent is selected from the group consisting of sucrose, fructose, saccharin, cyclamate and aspartame.

4. The psyllium food product base of Claim 1 wherein flavoring agents, protein sources, surfactants, wetting agents, sweeteners or preservatives either alone or in any combination are added.

5. The psyllium food product base of Claim 1 additionally comprising up to 5 weight percent of an agglomerating coating.

6. The psyllium food product base of Claim 4 additionally comprising up to 5 weight percent of an agglomerating coating.

7. An expanded high fiber bar or puff made by aqueous extrusion comprising about 10 to 80 weight percent of psyllium mucilloid, water, about 10 to 30 weight percent expander, and a total dietary fiber of from about 25 to 80 weight percent wherein the psyllium mucilloid is a part of the dietary fiber.

8. The high fiber bar or puff of Claim 7 which additionally comprises a sweetening agent.

9. The high fiber bar or puff of Claim 8 wherein said sweetening agent is selected from the group consisting of saccharin, aspartame, acetosulfame cyclamate, sucrose and fructose.

10. The high fiber bar or puff of Claim 7 which additionally comprises flavoring agents, protein sources, sweetening agents, surfactants, wetting agents, or preservatives either alone or in any combination.

11. The high fiber bar or puff of Claim 7 wherein said protein source is soy protein isolate or milk protein.

12. A method of making an expanded high fiber bar or puff comprising making a mixture comprising psyllium mucilloid, 10 to 30 weight percent of an expander and a total dietary fiber from a grain source of from about 25 to 80 weight percent wherein the psyllium mucilloid is a part of the dietary fiber, blending the mixture until substantially homogeneous and then extruding with water at a temperature of from about 150° to 200° C such that the final product has a psyllium content of between 10 to 80 weight percent.

**Patentansprüche**

1. Ein trocken-vermengter Psyllium-Nahrungsmittelgrundstoff mit hohem Faseranteil, enthaltend etwa 20 bis 80 Gewichtsprozent Psyllium Mucilloid und 25 bis 100 Gewichtsprozent diätische Faser, worin das Psyllium Mucilloid ein Teil der diätischen Faser ist und die anderen diätischen Fasern wenigstens 5 Gewichtsprozent des Gesamtfasergehaltes bilden.

2. Der Psyllium-Nahrungsmittelgrundstoff gemäss Anspruch 1, worin dieser Grundstoff zusätzlich bis zu 5 Gewichtsprozent eines Süßstoffs umfasst.

3. Der Psyllium-Nahrungsmittelgrundstoff gemäss Anspruch 2, worin dieser Süßstoff ausgewählt ist aus der Gruppe bestehend aus Sucrose, Fructose, Saccharin, Cyclamat und Aspartam.

4. Der Psyllium-Nahrungsmittelgrundstoff gemäss Anspruch 1, worin Geschmacksstoffe, Proteinquellen, oberflächenaktive Stoffe, Benetzungsmittel, Süßstoffe oder Konservierungsmittel entweder allein oder in irgendeiner Kombination hinzugefügt sind.

5. Der Psyllium-Nahrungsmittelgrundstoff gemäss Anspruch 1, welcher zusätzlich bis zu 5 Gewichtsprozent eines agglomerierenden Überzugs enthält.

6. Der Psyllium-Nahrungsmittelgrundstoff gemäss Anspruch 4, welcher zusätzlich bis zu 5 Gewichtsprozent eines agglomerierenden Überzugs enthält.

7. Ein ausgezogener Riegel oder Keks mit hohem Faseranteil, hergestellt durch wässrige Extrusion, enthaltend etwa 10 bis 80 Gewichtsprozent Psyllium Mucilloid, Wasser, etwa 10 bis 30 Gewichtsprozent Streckmittel, und einen Gesamtgehalt an diätischer Faser von etwa 25 bis 80 Gewichtsprozent, worin das Psyllium Mucilloid ein Teil der diätischen Faser ist.

8. Der Riegel oder Keks mit hohem Faseranteil gemäss Anspruch 7, welcher zusätzlich einen Süßstoff enthält.

9. Der Riegel oder Keks mit hohem Faseranteil gemäss Anspruch 8, worin dieser Süßstoff ausgewählt ist aus der Gruppe bestehend aus Saccharin, Aspartam, Acetosulfam, Cyclamat, Sucrose und Fructose.

10. Der Riegel oder Keks mit hohem Faseranteil gemäss Anspruch 7, welcher zusätzlich Geschmacksstoffe, proteinquellen, Süßstoffe, oberflächenaktive Stoffe, Benetzungsmittel oder Konservierungsmittel entweder allein oder in irgendeiner Kombination enthält.

11. Der Riegel oder Keks mit hohem Faseranteil gemäss Anspruch 7, worin diese Proteinquelle Sojaproteinisolat oder Milchprotein ist.

12. Ein Verfahren zur Herstellung eines ausgezogenen Riegels oder Kekses mit hohem Faseranteil, umfassend die Herstellung einer Mischung, enthaltend Psyllium Mucilloid, 10 bis 30 Gewichtsprozent eines Streckmittels und einen Gesamtgehalt an diätischer Faser aus einer Kornquelle von etwa 25 bis 80 Gewichtsprozent, worin das Psyllium Mucilloid ein Teil der diätischen Faser ist, die Vermengung der Mischung, bis sie im wesentlichen homogen ist, und dann die Extrusion mit Wasser bei einer Temperatur von etwa 150°C bis 200°C, so dass das Endprodukt einen Psylliumgehalt zwischen 10 und 80 Gewichtsprozent aufweist.

**Revendications**

1. Base de produit alimentaire à teneur élevée en fibres et renfermant du psyllium, obtenue par mélange à sec, comprenant d'environ 20 à 80 pour cent en poids de mucilloïde de psyllium et de 25 à 100 pour cent en poids de fibres diététiques, dans lequel le mucilloïde de psyllium représente une partie des fibres diététiques et les fibres diététiques autres que le psyllium constituent au moins 5 pour cent en poids des fibres totales.

2. Base de produit alimentaire renfermant du psyllium, selon la revendication 1, dans laquelle ladite base comprend en outre jusqu'à 5 pour cent en poids d'un agent édulcorant.

3. Base de produit alimentaire renfermant du psyllium, selon la revendication 2, dans laquelle ledit agent édulcorant est choisi dans le groupe constitué par le sucrose, le fructose, la saccharine, le cyclamate et l'aspartame.

4. Base de produit alimentaire renfermant du psyllium, selon la revendication 1, dans laquelle des arômes, des sources de protéines, des agents tensio-actifs, des agents mouillants, des édulcorants ou des conservateurs sont ajoutés, soit seuls, soit en toute combinaison.

5. Base de produit alimentaire renfermant du psyllium, selon la revendication 1, comprenant en outre jusqu'à 5 pour cent en poids d'un enrobage agglomérant.

6. Base de produit alimentaire renfermant du psyllium, selon la revendication 4, comprenant en outre jusqu'à 5 pour cent en poids d'un enrobage agglomérant.

7. Barre ou gâteau feuilleté, à teneur élevée en fibres, expansé, réalisé par extrusion aqueuse, comprenant environ 10 à 80 pour cent en poids de mucilloïde de psyllium, de l'eau, environ 10 à 30 pour cent en poids d'un agent d'expansion, et des fibres diététiques totales d'environ 25 à 80 pour cent en poids, où le mucilloïde de psyllium représente une partie des fibres diététiques.

8. Barre ou gâteau feuilleté à teneur élevée en fibres, selon la revendication 7, qui comprend en outre un agent édulcorant.

9. Barre ou gâteau feuilleté à teneur élevée en fibres, selon la revendication 8, dans lequel ledit agent édulcorant est choisi dans le groupe constitué par la saccharine, l'aspartame, l'acétosulfame cyclamate, le sucrose et le fructose.

10. Barre ou gâteau feuilleté à teneur élevée en fibres, selon la revendication 7, qui comprend en outre des arômes, des sources de protéines, des agents édulcorants, des agents tensio-actifs, des agents mouillants ou des conservateurs, soit seuls, soit en toute combinaison.

11. Barre ou gâteau feuilleté à teneur élevée en fibres, selon la revendication 7, dans lequel ladite source de protéines est un isolat de protéines de soja ou des protéines du lait.

12. Procédé de fabrication d'une barre ou d'un gâteau feuilleté à teneur élevée en fibres, expansé, consistant à réaliser un mélange comprenant du mucilloïde de psyllium, 10 à 30 pour cent en poids d'un agent d'expansion et des fibres diététiques totales provenant d'une source de grains allant d'environ 25 à 80 pour cent en poids, où le mucilloïde de psyllium représente une partie des fibres diététiques, à malaxer le mélange jusqu'à ce qu'il soit sensiblement homogène, puis à extruder avec de l'eau à une température allant d'environ 150 à 200°C, de telle sorte que le produit final présente une teneur en psyllium comprise entre 10 et 80 pour cent en poids.